# EUROPEAN PATENT APPLICATION

(11) **EP 4 156 621 A1**
(43) Date of publication of application: **29.03.2023**
(21) Application number: 21820965.8
(22) Date of filing: 18.05.2021
(51) Int. Cl.: H04L 29/06

(54) **METHOD AND APPARATUS FOR ACQUIRING NETWORK ADDRESS OF MUD FILE, AND STORAGE MEDIUM**

(30) Priority: 09.06.2020 CN 202010519677
(71) Applicant: Huawei Technologies Co., Ltd., Longgang District, Shenzhen, Guangdong 518129 (CN)
(72) Inventor: ZHANG, Yinxi, Shenzhen, Guangdong 518129 (CN); YU, Bin, Shenzhen, Guangdong 518129 (CN); XIA, Liang, Shenzhen, Guangdong 518129 (CN); WU, Yinggen, Shenzhen, Guangdong 518129 (CN)
(74) Representative: Maiwald GmbH
(86) International application number: PCT/CN2021/094299
(87) International publication number: WO 2021/249135

(57) **Abstract**

A method and an apparatus for obtaining a network address of a MUD file, and a storage medium are disclosed, and belong to the field of communication technologies. In the method, a network device obtains hardware information of a terminal that initiates authentication, and then obtains a network address of a MUD file of the terminal based on the hardware information of the terminal. The hardware information is one or more of the following information: an identifier of an access device of the terminal, an access port number of the terminal, or a terminal type. In this way, when the terminal initiates authentication, the network device may automatically obtain the network address of the MUD file of the terminal, and the terminal does not need to send the network address of the MUD file. Therefore, a deployed terminal can be smoothly integrated into a MUD management framework in the IETF RFC 8520 standard, to avoid upgrading and reconstructing the terminal, and reduce operation costs.

## Description

Embodiments of this application claim priority to Chinese Patent Application No. 202010519677.1, filed with the China National Intellectual Property Administration on June 9, 2020 and entitled "METHOD AND APPARATUS FOR OBTAINING NETWORK ADDRESS OF MUD FILE, AND STORAGE MEDIUM", which is incorporated in embodiments of this application by reference in its entirety.

### TECHNICAL FIELD

This application relates to the field of communication technologies, and in particular, to a method and an apparatus for obtaining a network address of a manufacturer usage description (manufacturer usage description, MUD) file, and a storage medium.

### BACKGROUND

With transformation of enterprises toward digitalization and intelligence, more internet of things (Internet of things, loT) terminals appear in an enterprise campus, including a printer, a camera, a light emitting diode (light emitting diode, LED) lamp, a conference room projector, a conference terminal, and the like. A requirement of an enterprise for a campus network is also transformed from simple access of an office system (for example, a laptop and a desktop computer) to unified access of the office system and various IoT terminals.

A procedure in which a manufacture of the IoT terminal cooperates with the campus network is defined in the internet engineering task force (The Internet Engineering Task Force, IETF) request for comments (Request For Comments, RFC) 8520 standard. In the IETF RFC 8520 standard, a MUD file is used as a core to identify manufacturer information and an access permission requirement of the IoT terminal. Each manufacturer defines a MUD file based on a requirement of the IoT terminal. A network address of the MUD file may be transferred from the IoT terminal to a controller in the campus network by using an authentication procedure of the IoT terminal. The controller may obtain the related MUD file from a MUD file server to which the network address of the MUD file points, and then complete automatic mapping from access permission of the IoT terminal to a network policy based on the MUD file.

In the solution, the IoT terminal needs to include the network address of the MUD file in an authentication packet, to transfer the network address of the MUD file to the controller. To implement this solution, the IoT terminal needs to be reconstructed, so that the authentication packet sent by the IoT terminal can carry the network address of the MUD file. However, there are a large quantity of deployed IoT terminals in the enterprise campus, and it is very difficult to reconstruct such a large quantity of IoT terminals.

### SUMMARY

Embodiments of this application provide a method and an apparatus for obtaining a network address of a MUD file, and a storage medium, to avoid upgrading and reconstructing a terminal.

According to a first aspect, a method for obtaining a network address of a MUD file is provided. In the method, a network device obtains hardware information of a terminal that initiates authentication, and then obtains a network address of a MUD file of the terminal based on the hardware information of the terminal.

The hardware information of the terminal is one or more of the following information: an identifier of an access device of the terminal, an access port number of the terminal, or a terminal type. Certainly, the hardware information of the terminal may alternatively be other information that can represent an access characteristic or an attribute of the terminal.

The network address of the MUD file is used to indicate a network storage location of the MUD file. For example, the network address of the MUD file may be a uniform resource locator (Uniform Resource Locator, URL) of the MUD file. The network address of the MUD file points to a MUD file server that stores the MUD file, and the MUD file may be obtained from the MUD file server based on the network address of the MUD file.

In this embodiment of this application, when the terminal initiates authentication, the network device may automatically obtain the network address of the MUD file of the terminal, and the terminal does not need to send the network address of the MUD file. Therefore, a deployed terminal can be smoothly integrated into a MUD management framework in the IETF RFC 8520 standard, to avoid upgrading and reconstructing the terminal, and reduce operation costs.

Optionally, when the network device obtains the network address of the MUD file of the terminal based on the hardware information of the terminal, the network device may obtain, based on a correspondence between hardware information and a network address, a network address corresponding to the hardware information of the terminal, and use the network address as the network address of the MUD file of the terminal.

The correspondence between hardware information and a network address may be preconfigured in the network device. The network device may quickly obtain, based on the correspondence, the network address corresponding to the hardware information of the terminal. An obtaining manner is simple, and obtaining efficiency is high.

In a possible manner, the network device is a controller. When the controller obtains the hardware information of the terminal that initiates authentication, the controller may receive an authentication packet sent by the access device. The authentication packet includes the hardware information of the terminal.

When the terminal needs to access a campus network, the terminal may initiate authentication to the access device. After the terminal initiates authentication to the access device, the access device may obtain the hardware information of the terminal. Then, the access device may send, to the controller, the authentication packet that carries the hardware information of the terminal. The authentication packet is used to request to authenticate the terminal. In this way, when the terminal initiates authentication, the controller may quickly obtain the hardware information of the terminal through the access device.

In this case, after obtaining the network address of the MUD file of the terminal based on the hardware information of the terminal, the controller may further obtain the MUD file from the MUD file server based on the network address of the MUD file.

The MUD file may be defined by a manufacturer of the terminal based on a requirement of the terminal and stored in the MUD file server. The MUD file includes an abstract communication intention related to the terminal, and may specifically include manufacturer information and requirement information of the terminal. In other words, the MUD file aims to send a signal to the campus network for the terminal, to indicate specific network configurations in which a function required by the terminal runs normally.

Further, after obtaining the MUD file from the MUD file server based on the network address of the MUD file, the controller may further generate a network policy based on the MUD file. Specifically, the controller may generate a corresponding network policy based on each piece of requirement information carried in the MUD file, to meet a service requirement of the terminal.

After generating the network policy, the controller may further deliver the network policy to the access device. The access device may perform a corresponding network configuration according to the network policy. After completing the corresponding network configuration, the access device may notify the terminal that authentication succeeds. Then, the access device may control, based on the network configuration, a network service of the terminal that has accessed the campus network.

In another possible manner, the network device is an access device. After obtaining the network address of the MUD file of the terminal based on the hardware information of the terminal, the access device may further send the network address of the MUD file to the controller. The controller obtains the MUD file from the MUD file server based on the network address of the MUD file, and generates the corresponding network policy based on the MUD file, to meet the service requirement of the terminal.

According to a second aspect, an apparatus for obtaining a network address of a MUD file is provided. The apparatus for obtaining a network address of a MUD file has a function of implementing the method for obtaining a network address of a MUD file in the first aspect. The apparatus for obtaining a network address of a MUD file includes at least one module, and the at least one module is configured to implement the method for obtaining a network address of a MUD file provided in the first aspect.

According to a third aspect, an apparatus for obtaining a network address of a MUD file is provided. The apparatus for obtaining a network address of a MUD file includes a processor and a memory. The memory is configured to store a program that supports the apparatus for obtaining a network address of a MUD file to perform the method for obtaining a network address of a MUD file provided in the first aspect, and store data used to implement the method for obtaining a network address of a MUD file in the first aspect. The processor is configured to execute the program stored in the memory. The apparatus for obtaining a network address of a MUD file may further include a communication bus. The communication bus is configured to establish a connection between the processor and the memory.

According to a fourth aspect, a computer-readable storage medium is provided. The computer-readable storage medium stores instructions; and when the instructions run on a computer, the computer is enabled to perform the method for obtaining a network address of a MUD file in the first aspect.

According to a fifth aspect, a computer program product including instructions is provided. When the instructions run on a computer, the computer is enabled to perform the method for obtaining a network address of a MUD file in the first aspect.

Technical effects obtained in the second aspect, the third aspect, the fourth aspect, and the fifth aspect are similar to those obtained by using corresponding technical means in the first aspect, and details are not described herein again.

### BRIEF DESCRIPTION OF DRAWINGS

FIG. 1 is a schematic diagram of an implementation environment according to an embodiment of this application;
FIG. 2 is a flowchart of a method for obtaining a network address of a MUD file according to an embodiment of this application;
FIG. 3 is a flowchart of another method for obtaining a network address of a MUD file according to an embodiment of this application;
FIG. 4 is a flowchart of still another method for obtaining a network address of a MUD file according to an embodiment of this application;
FIG. 5 is a schematic diagram of a structure of a computer device according to an embodiment of this application;
FIG. 6 is a schematic diagram of a structure of another computer device according to an embodiment of this application; and
FIG. 7 is a schematic diagram of a structure of an apparatus for obtaining a network address of a MUD file according to an embodiment of this application.

### DESCRIPTION OF EMBODIMENTS

As described in the background, to implement a solution in the IETF RFC 8520 standard, an IoT terminal needs to be reconstructed, so that an authentication packet sent by the IoT terminal can carry a network address of a MUD file. However, there are a large quantity of deployed IoT terminals in an enterprise campus, and it is very difficult to reconstruct such a large quantity of IoT terminals. Therefore, a method that can be used to smoothly integrate an existing IoT terminal into a MUD management framework in the existing IETF RFC 8520 standard is required.

To make the objectives, technical solutions, and advantages of embodiments of this application clearer, the following further describes implementations of this application in detail with reference to the accompanying drawings.

It should be understood that "a plurality of" mentioned in embodiments of this application means two or more. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used to distinguish between same items or similar items that have basically same functions or purposes. A person skilled in the art may understand that the terms such as "first" and "second" do not limit a quantity or an execution sequence, and the terms such as "first" and "second" do not indicate a definite difference.

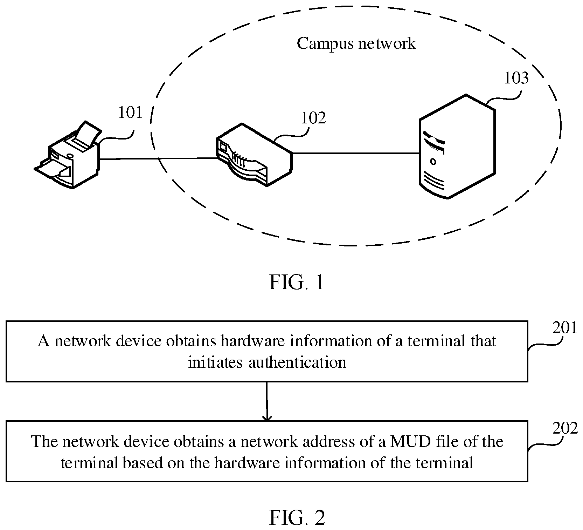

FIG. 1 is a schematic diagram of an implementation environment according to an embodiment of this application. Refer to FIG. 1. The implementation environment includes a terminal 101, an access device 102, and a controller 103.

The access device 102 and the controller 103 are located in a campus network. The terminal 101 may access the campus network through the access device 102. The terminal 101 and the access device 102 may communicate through a wired connection or a wireless connection, and the access device 102 and the controller 103 may communicate through a wired connection or a wireless connection.

The terminal 101 may be an IoT terminal, including a printer, a camera, an LED lamp, a conference room projector, a conference terminal, or the like. The terminal 101 is a terminal that needs to access a campus network, to use a service provided by the campus network. The terminal 101 needs to initiate authentication when accessing the campus network.

The access device 102 provides the terminal 101 with a port for accessing the campus network. The port may be a physical port, or may be a logical port. The access device 102 acts as a proxy between the terminal 101 and the controller 103. The terminal 101 may initiate authentication to the controller 103 through the access device 102.

The controller 103 may be an authentication, authorization, accounting (Authentication, Authorization, Accounting, AAA) server, and the AAA server may be a remote authentication dial-in user service (remote authentication dial-in user service, RADIUS) server, a terminal access controller access control system (terminal access controller access-control system, TACACS), or the like. The controller 103 may verify an identity of the terminal 101, to determine whether the terminal 101 has permission to use the service provided by the campus network. After authentication of the terminal 101 succeeds, the controller 103 may feed back, to the terminal 101 through the access device 102, a message indicating that authentication succeeds.

The access device 102 and the controller 103 may be distributed on two different physical entities, or may be centralized on one physical entity. When the access device 102 and the controller 103 are centralized on one physical entity, the physical entity independently completes authentication of the terminal 101.

The following describes a method for obtaining a network address of a MUD file provided in an embodiment of this application.

FIG. 2 is a flowchart of a method for obtaining a network address of a MUD file according to an embodiment of this application. The method is applied to a network device, and the network device may be the access device 102 or the controller 103 shown in FIG. 1. Refer to FIG. 2. The method includes the following steps.

Step 201: A network device obtains hardware information of a terminal that initiates authentication.

The network device may be located in a campus network. To access the campus network, the terminal may initiate authentication to the network device. After the terminal initiates authentication to the network device, the network device may obtain the hardware information of the terminal.

For example, the hardware information of the terminal may be one or more of the following information: an identifier of an access device of the terminal, an access port number of the terminal, a terminal type, or the like. Certainly, the hardware information of the terminal may alternatively be other information that can represent an access characteristic or an attribute of the terminal.

Step 202: The network device obtains a network address of a MUD file of the terminal based on the hardware information of the terminal.

Specifically, the network device may obtain, based on a correspondence between hardware information and a network address, a network address corresponding to the hardware information of the terminal, and use the network address as the network address of the MUD file of the terminal.

The network address of the MUD file is used to indicate a network storage location of the MUD file. For example, the network address of the MUD file may be a URL of the MUD file. The network address of the MUD file points to a MUD file server that stores the MUD file, and the MUD file may be obtained from the MUD file server based on the network address of the MUD file.

The correspondence between hardware information and a network address may be preconfigured in the network device. The network device may quickly obtain, based on the correspondence, the network address corresponding to the hardware information of the terminal. An obtaining manner is simple, and obtaining efficiency is high.

For example, when the hardware information is the access port number of the terminal, the correspondence between hardware information and a network address may be shown in Table 1; and when the hardware information is the terminal type, the correspondence between hardware information and a network address may be shown in Table 2.

**Table 1**

| Access port number | Network address |
|---|---|
| Interface 1/0/1 | http://zyx.com/ledlight |
| Interface 1/0/2 | http://zyx.com/printer |
| ... | ... |

**Table 2**

| Terminal type | Network address |
|---|---|
| Ledlight | http://zyx.com/ledlight |
| Printer | http://zyx.com/printer |
| ... | ... |

It should be noted that, the correspondences between hardware information and a network address shown in Table 1 and Table 2 are only used as examples for description in this embodiment of this application, and do not constitute a limitation on this embodiment of this application.

In this embodiment of this application, the network device obtains the hardware information of the terminal that initiates authentication, and then obtains the network address of the MUD file of the terminal based on the hardware information of the terminal. In this way, when the terminal initiates authentication, the network device may automatically obtain the network address of the MUD file of the terminal, and the terminal does not need to send the network address of the MUD file. Therefore, a deployed terminal can be smoothly integrated into a MUD management framework in the IETF RFC 8520 standard, to avoid upgrading and reconstructing the terminal, and reduce operation costs.

The following describes a case in which the network device is an access device.

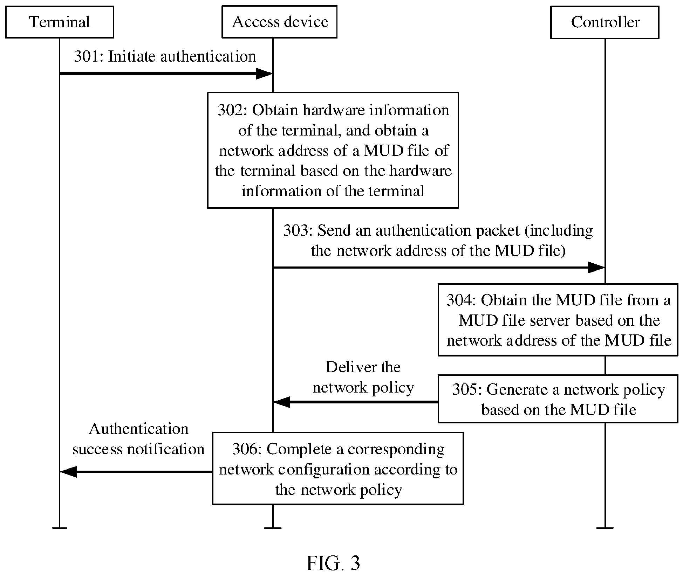

FIG. 3 is a flowchart of a method for obtaining a network address of a MUD file according to an embodiment of this application. The method is applied to the implementation environment shown in FIG. 1. Refer to FIG. 3. The method includes the following steps.

Step 301: A terminal initiates authentication to an access device.

When the terminal needs to access a campus network, the terminal may initiate authentication to the access device in the campus network. Authentication initiated by the terminal may be 802.1X authentication, media access control (media access control, MAC) authentication, or portal authentication. A different protocol packet is used for each type of authentication. For example, an extensible authentication protocol (Extensible Authentication Protocol, EAP) packet may be used for 802.1X authentication, a dynamic host configuration protocol (Dynamic Host Configuration Protocol, DHCP) packet may be used for MAC authentication, and a link layer discovery protocol (Link Layer Discovery Protocol, LLDP) packet may be used for portal authentication.

Step 302: The access device obtains hardware information of the terminal, and obtains a network address of a MUD file of the terminal based on the hardware information of the terminal.

After the terminal initiates authentication to the access device, the access device may obtain the hardware information of the terminal. For example, the hardware information may be an identifier of the access device, an access port number of the terminal, or a terminal type. Certainly, the hardware information may alternatively be other information that can represent an access characteristic or an attribute of the terminal.

An operation that the access device obtains the network address of the MUD file of the terminal based on the hardware information of the terminal may be as follows: The access device obtains, based on a correspondence between hardware information and a network address, a network address corresponding to the hardware information of the terminal, and uses the network address as the network address of the MUD file of the terminal.

The correspondence between hardware information and a network address may be preconfigured in the access device. For example, the correspondence between hardware information and a network address may be shown in Table 1 or Table 2.

Step 303: The access device sends an authentication packet to a controller, where the authentication packet includes the network address of the MUD file.

The authentication packet sent by the access device to the controller is used to request to authenticate the terminal. For example, the authentication packet may be a RADIUS packet.

Step 304: After receiving the authentication packet sent by the access device, the controller obtains the MUD file from a MUD file server based on the network address of the MUD file.

The MUD file may be defined by a manufacturer of the terminal based on a requirement of the terminal and stored in the MUD file server. The MUD file includes an abstract communication intention related to the terminal, and may specifically include manufacturer information and requirement information of the terminal. In other words, the MUD file aims to send a signal to the campus network for the terminal, to indicate specific network configurations in which a function required by the terminal runs normally.

The controller may obtain, from the MUD file server based on the network address of the MUD file and by using hypertext transfer protocol secure (HyperText Transfer Protocol over Secure, Https), the MUD file defined by the manufacturer for the terminal.

Step 305: The controller generates a network policy based on the MUD file, and delivers the network policy to the access device.

Specifically, the controller may generate a corresponding network policy based on each piece of requirement information carried in the MUD file, to meet a service requirement of the terminal.

For example, the MUD file includes a field related to access permission, and the field related to access permission includes information related to an access permission requirement of the terminal. In this case, the controller may configure an access control list (access control list, ACL), or the like based on the field related to access permission in the MUD file. The ACL is used to control a packet. If the packet matches a rule in which an action is "permit (permit)" in the ACL, the packet is allowed, and if the packet matches a rule in which an action is "deny (deny)" in the ACL, the packet is discarded.

Step 306: After completing a corresponding network configuration according to the network policy, the access device notifies the terminal that authentication succeeds.

The access device may perform the corresponding network configuration (including but not limited to an interface configuration, a protocol configuration, and a service configuration) according to the network policy. After completing the corresponding network configuration, the access device may notify the terminal that authentication succeeds. Then, the access device may control, based on the network configuration, a network service of the terminal that has accessed the campus network, to meet the service requirement of the terminal.

The following describes a case in which the network device is a controller.

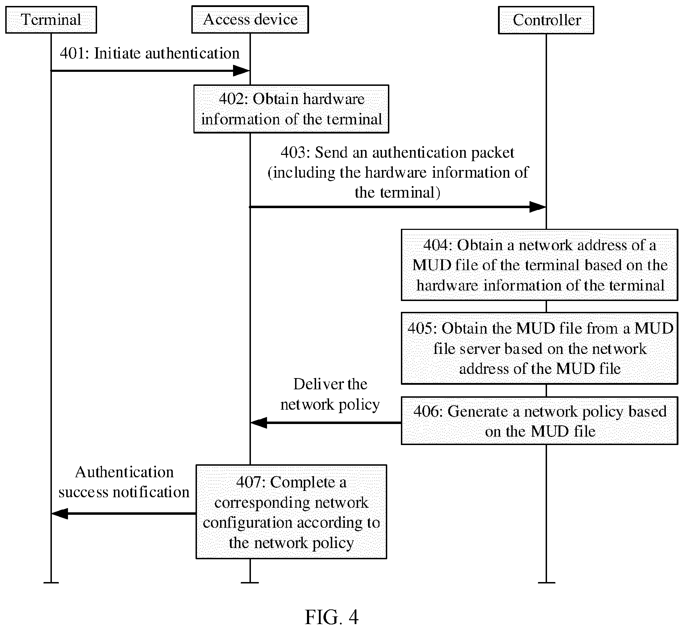

FIG. 4 is a flowchart of a method for obtaining a network address of a MUD file according to an embodiment of this application. The method is applied to the implementation environment shown in FIG. 1. Refer to FIG. 4. The method includes the following steps.

Step 401: A terminal initiates authentication to an access device.

When the terminal needs to access a campus network, the terminal may initiate authentication to the access device in the campus network. Authentication initiated by the terminal may be 802.1X authentication, MAC authentication, or portal authentication. A different protocol packet is used for each type of authentication. For example, an EAP packet may be used for 802.1X authentication, a DHCP packet may be used for MAC authentication, and an LLDP packet may be used for portal authentication.

Step 402: The access device obtains hardware information of the terminal.

After the terminal initiates authentication to the access device, the access device may obtain the hardware information of the terminal. For example, the hardware information may be an identifier of the access device, an access port number of the terminal, or a terminal type. Certainly, the hardware information may alternatively be other information that can represent an access characteristic or an attribute of the terminal.

Step 403: The access device sends an authentication packet to a controller, where the authentication packet includes the hardware information of the terminal.

The authentication packet sent by the access device to the controller is used to request to authenticate the terminal. For example, the authentication packet may be a RADIUS packet. The authentication packet may include the hardware information of the terminal. In this way, when the terminal initiates authentication, the controller may quickly obtain the hardware information of the terminal through the access device.

Step 404: After receiving the authentication packet sent by the access device, the controller obtains a network address of a MUD file of the terminal based on the hardware information of the terminal.

Specifically, the controller may obtain, based on a correspondence between hardware information and a network address, a network address corresponding to the hardware information of the terminal, and use the network address as the network address of the MUD file of the terminal.

The correspondence between hardware information and a network address may be preconfigured in the controller. For example, the correspondence between hardware information and a network address may be shown in Table 1 or Table 2.

Step 405: The controller obtains the MUD file from a MUD file server based on the network address of the MUD file.

The MUD file may be defined by a manufacturer of the terminal based on a requirement of the terminal and stored in the MUD file server. The MUD file includes an abstract communication intention related to the terminal, and may specifically include manufacturer information and requirement information of the terminal. In other words, the MUD file aims to send a signal to the campus network for the terminal, to indicate specific network configurations in which a function required by the terminal runs normally.

The controller may obtain, from the MUD file server based on the network address of the MUD file and by using HTTPS, the MUD file defined by the manufacturer for the terminal.

Step 406: The controller generates a network policy based on the MUD file, and delivers the network policy to the access device.

Specifically, the controller may generate a corresponding network policy based on each piece of requirement information carried in the MUD file, to meet a service requirement of the terminal.

For example, the MUD file includes a field related to access permission, and the field related to access permission includes information related to an access permission requirement of the terminal. In this case, the controller may configure an ACL, or the like based on the field related to access permission in the MUD file. The ACL is used to control a packet. If the packet matches a rule in which an action is "permit" in the ACL, the packet is allowed, and if the packet matches a rule in which an action is "deny" in the ACL, the packet is discarded.

Step 407: After completing a corresponding network configuration according to the network policy, the access device notifies the terminal that authentication succeeds.

The access device may perform the corresponding network configuration (including but not limited to an interface configuration, a protocol configuration, and a service configuration) according to the network policy. After completing the corresponding network configuration, the access device may notify the terminal that authentication succeeds. Then, the access device may control, based on the network configuration, a network service of the terminal that has accessed the campus network, to meet the service requirement of the terminal.

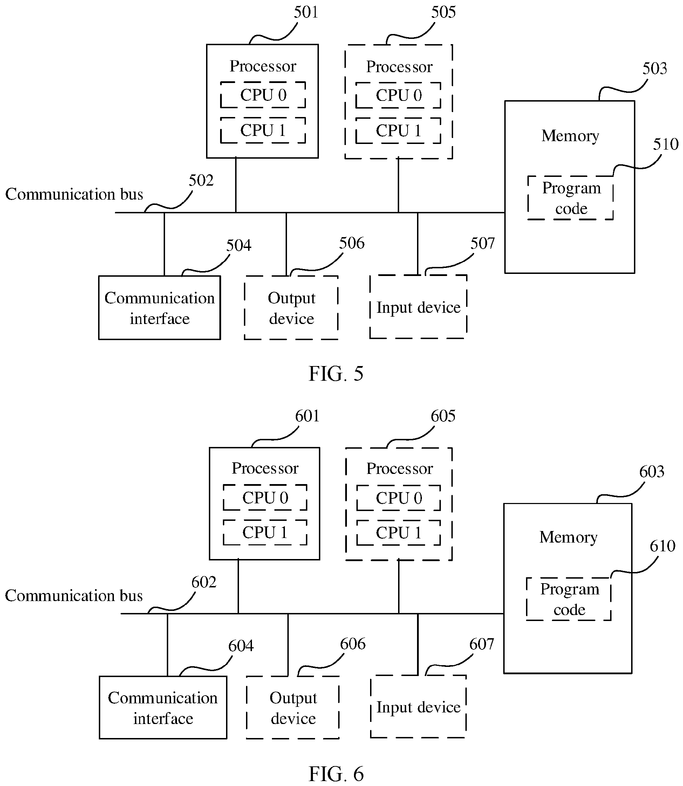

FIG. 5 is a schematic diagram of a structure of a computer device according to an embodiment of this application. The computer device may be the access device 102 shown in FIG. 1. Refer to FIG. 5. The computer device includes at least one processor 501, a communication bus 502, a memory 503, and at least one communication interface 504.

The processor 501 may be a central processing unit (central processing unit, CPU), an application-specific integrated circuit (application-specific integrated circuit, ASIC), or one or more integrated circuits configured to control program execution of the solutions in this application.

The communication bus 502 may include a path, to transfer information between the foregoing components.

The memory 503 may be a read-only memory (read-only memory, ROM), a random access memory (random access memory, RAM), an electrically erasable programmable read only memory (electrically erasable programmable read-Only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store desired program code in a form of an instruction or a data structure and that can be accessed by a computer. However, this is not limited thereto. The memory 503 may exist independently, and is connected to the processor 501 through the communication bus 502. Alternatively, the memory 503 may be integrated with the processor 501.

The communication interface 504 may be any apparatus of a transceiver type, and is configured to communicate with another device or a communication network, for example, the Ethernet, a radio access network (radio access network, RAN), or a wireless local area network (wireless local area network, WLAN).

During specific implementation, in an embodiment, the processor 501 may include one or more CPUs, for example, a CPU 0 and a CPU 1 in FIG. 5.

In a specific implementation, in an embodiment, the computer device may include a plurality of processors such as the processor 501 and a processor 505 shown in FIG. 5. Each of these processors may be a single-core processor, or may be a multi-core processor. The processor herein may refer to one or more devices, circuits, and/or processing cores configured to process data (for example, computer program instructions).

In a specific implementation, in an embodiment, the computer device may further include an output device 506 and an input device 507. The output device 506 communicates with the processor 501, and may display information in a plurality of manners. For example, the output device 506 may be a liquid crystal display (liquid crystal display, LCD), an LED display device, a cathode-ray tube (cathode ray tube, CRT) display device, or a projector (projector). The input device 507 communicates with the processor 501, and may receive an input from a user in a plurality of manners. For example, the input device 507 may be a mouse, a keyboard, a touchscreen device, or a sensing device.

The computer device may be a general-purpose computer device or a special-purpose computer device. In a specific implementation, the computer device may be a desktop computer, a portable computer, a network server, a palmtop computer, a mobile phone, a tablet computer, a wireless terminal device, a communication device, or an embedded device. A type of the computer device is not limited in this embodiment of this application.

The memory 503 is configured to store program code 510 for executing the solutions of this application, and the processor 501 is configured to execute the program code 510 stored in the memory 503. The computer device may implement, through the processor 501 and the program code 510 in the memory 503, the method for obtaining a network address of a MUD file provided in the embodiment in FIG. 2, or an operation performed by the access device in the method for obtaining a network address of a MUD file provided in the embodiment in FIG. 3.

FIG. 6 is a schematic diagram of a structure of a computer device according to an embodiment of this application. The computer device may be the controller 103 shown in FIG. 1. Refer to FIG. 6. The computer device includes at least one processor 601, a communication bus 602, a memory 603, and at least one communication interface 604.

The processor 601 may be a microprocessor (including a CPU, or the like), an ASIC, or may be one or more integrated circuits configured to control execution of a program in the solutions of this application.

The communication bus 602 may include a path, to transfer information between the foregoing components.

The memory 603 may be a ROM, a RAM, an EEPROM, or an optical disc (including a CD-ROM, a compact disc, a laser disc, a digital versatile disc, a Blu-ray disc, or the like), disk storage medium or another magnetic storage device, or any other medium that can be used to carry or store desired program code in a form of an instruction or a data structure and that can be accessed by a computer. However, this is not limited thereto. The memory 603 may exist independently, and is connected to the processor 601 through the communication bus 602. Alternatively, the memory 603 may be integrated with the processor 601.

The communication interface 604 may be any apparatus of a transceiver type, and is configured to communicate with another device or a communication network, for example, the Ethernet, a RAN, or a WLAN.

During specific implementation, in an embodiment, the processor 601 may include one or more CPUs, for example, a CPU 0 and a CPU 1 in FIG. 6.

In a specific implementation, in an embodiment, the computer device may include a plurality of processors such as the processor 601 and a processor 605 shown in FIG. 6. Each of these processors may be a single-core processor, or may be a multi-core processor. The processor herein may refer to one or more devices, circuits, and/or processing cores configured to process data (for example, computer program instructions).

In a specific implementation, in an embodiment, the computer device may further include an output device 606 and an input device 607. The output device 606 communicates with the processor 601, and may display information in a plurality of manners. For example, the output device 606 may be an LCD, an LED display device, a CRT display device, or a projector. The input device 607 communicates with the processor 601, and may receive an input from a user in a plurality of manners. For example, the input device 607 may be a mouse, a keyboard, a touchscreen device, or a sensing device.

The computer device may be a general-purpose computer device or a special-purpose computer device. In a specific implementation, the computer device may be a desktop computer, a portable computer, a network server, a palmtop computer, a mobile phone, a tablet computer, a wireless terminal device, a communication device, or an embedded device. A type of the computer device is not limited in this embodiment of this application.

The memory 603 is configured to store program code 610 for executing the solutions of this application, and the processor 601 is configured to execute the program code 610 stored in the memory 603. The computer device may implement, through the processor 601 and the program code 610 in the memory 603, the method for obtaining a network address of a MUD file provided in the embodiment in FIG. 2, or an operation performed by the controller in the method for obtaining a network address of a MUD file provided in the embodiment in FIG. 4.

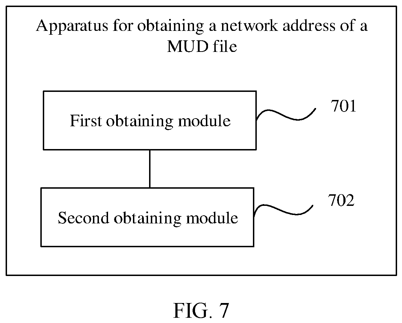

FIG. 7 is a schematic diagram of a structure of an apparatus for obtaining a network address of a MUD file according to an embodiment of this application. The apparatus may be implemented as a part or all of a computer device by using software, hardware, or a combination of software and hardware.

Refer to FIG. 7. The apparatus includes a first obtaining module 701 and a second obtaining module 702.

The first obtaining module 701 is configured to perform step 201 in the embodiment in FIG. 2.

The second obtaining module is configured to perform step 202 in the embodiment in FIG. 2.

Optionally, a network device is a controller, and the apparatus further includes:
a third obtaining module, configured to obtain a MUD file from a MUD file server based on a network address of the MUD file.

Optionally, the first obtaining module 701 is configured to:
receive an authentication packet sent by an access device, where the authentication packet includes hardware information of a terminal, and the hardware information of the terminal is obtained by the access device when the terminal initiates authentication to the access device.

Optionally, the apparatus further includes:
a generation module, configured to generate a network policy based on the MUD file.

Optionally, a network device is an access device, and the apparatus further includes:
a sending module, configured to send a network address of a MUD file to a controller, so that the controller obtains the MUD file from a MUD file server based on the network address of the MUD file.

In this embodiment of this application, the hardware information of the terminal that initiates authentication is obtained, and then, the network address of the MUD file of the terminal is obtained based on the hardware information of the terminal. In this way, when the terminal initiates authentication, the network address of the MUD file of the terminal may be automatically obtained, and the terminal does not need to send the network address of the MUD file. Therefore, a deployed terminal can be smoothly integrated into a MUD management framework in the IETF RFC 8520 standard, to avoid upgrading and reconstructing the terminal, and reduce operation costs.

It should be noted that when the apparatus for obtaining a network address of a MUD file provided in embodiments obtains the network address of the MUD file, division into the functional modules is merely used as an example for illustration. In an actual application, the foregoing functions may be allocated to different functional modules and completed based on a requirement. In other words, an inner structure of the apparatus is divided into different functional modules, to implement all or a part of the functions described above. In addition, the apparatus for obtaining a network address of a MUD file provided in embodiments pertains to a same concept as the method embodiments for obtaining a network address of a MUD file. For a specific implementation process, refer to the method embodiments. Details are not described herein.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or may be a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state disk (Solid State Disk, SSD)), or the like.

The foregoing descriptions are merely embodiments of this application, but are not intended to limit this application. Any modification, equivalent replacement, or improvement made without departing from the principle of this application should fall within the protection scope of this application.

## Claims

1. A method for obtaining a network address of a manufacturer usage description MUD file, wherein the method comprises:
obtaining, by a network device, hardware information of a terminal that initiates authentication; and
obtaining, by the network device, a network address of a MUD file of the terminal based on the hardware information of the terminal, wherein
the hardware information is one or more of the following information: an identifier of an access device of the terminal, an access port number of the terminal, or a terminal type.

2. The method according to claim 1, wherein the network device is a controller, and after the obtaining, by the network device, a network address of a MUD file of the terminal based on the hardware information of the terminal, the method further comprises:
obtaining, by the controller, the MUD file from a MUD file server based on the network address of the MUD file.

3. The method according to claim 2, wherein the obtaining, by a network device, hardware information of a terminal that initiates authentication comprises:
receiving, by the controller, an authentication packet sent by the access device, wherein the authentication packet comprises the hardware information of the terminal, and the hardware information of the terminal is obtained by the access device when the terminal initiates authentication to the access device.

4. The method according to claim 2 or 3, wherein after the obtaining, by the controller, the MUD file from a MUD file server based on the network address of the MUD file, the method further comprises:
generating, by the controller, a network policy based on the MUD file.

5. The method according to claim 1, wherein the network device is an access device, and after the obtaining, by the network device, a network address of a MUD file of the terminal based on the hardware information of the terminal, the method further comprises:
sending, by the access device, the network address of the MUD file to a controller, so that the controller obtains the MUD file from a MUD file server based on the network address of the MUD file.

6. An apparatus for obtaining a network address of a manufacturer usage description MUD file, used in a network device, wherein the apparatus comprises:
a first obtaining module, configured to obtain hardware information of a terminal that initiates authentication; and
a second obtaining module, configured to obtain a network address of a MUD file of the terminal based on the hardware information of the terminal, wherein
the hardware information is one or more of the following information: an identifier of an access device of the terminal, an access port number of the terminal, or a terminal type.

7. The apparatus according to claim 6, wherein the network device is a controller, and the apparatus further comprises:
a third obtaining module, configured to obtain the MUD file from a MUD file server based on the network address of the MUD file.

8. The apparatus according to claim 7, wherein the first obtaining module is configured to:
receive an authentication packet sent by the access device, wherein the authentication packet comprises the hardware information of the terminal, and the hardware information of the terminal is obtained by the access device when the terminal initiates authentication to the access device.

9. The apparatus according to claim 7 or 8, wherein the apparatus further comprises:
a generation module, configured to generate a network policy based on the MUD file.

10. The apparatus according to claim 6, wherein the network device is an access device, and the apparatus further comprises:
a sending module, configured to send the network address of the MUD file to a controller, so that the controller obtains the MUD file from a MUD file server based on the network address of the MUD file.

11. A computer-readable storage medium, wherein the computer-readable storage medium stores instructions; and when the instructions are run on a computer, the computer is enabled to perform the method according to any one of claims 1 to 5.
